(19) Europäisches Patentamt / European Patent Office / Office européen des brevets

(11) **EP 4 495 568 A1**

(12) **EUROPEAN PATENT APPLICATION**
published in accordance with Art. 153(4) EPC

(43) Date of publication:
**22.01.2025 Bulletin 2025/04**

(21) Application number: **23770557.9**

(22) Date of filing: **07.03.2023**

(51) International Patent Classification (IPC):
**G01M 13/04** $^{(2019.01)}$    **F16C 19/52** $^{(2006.01)}$
**G01N 27/02** $^{(2006.01)}$

(52) Cooperative Patent Classification (CPC):
**F16C 19/52; G01M 13/04; G01N 27/02**

(86) International application number:
**PCT/JP2023/008683**

(87) International publication number:
**WO 2023/176601 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.03.2022 JP 2022039415**

(71) Applicant: **NSK Ltd.
Tokyo 141-8560 (JP)**

(72) Inventors:
• **AIKAWA, Fumiaki
  Fujisawa-shi, Kanagawa 251-8501 (JP)**
• **MARUYAMA, Taisuke
  Fujisawa-shi, Kanagawa 251-8501 (JP)**
• **ENAMI, Kakeru
  Fujisawa-shi, Kanagawa 251-8501 (JP)**

(74) Representative: **Grünecker Patent- und
Rechtsanwälte
PartG mbB
Leopoldstraße 4
80802 München (DE)**

(54) **MEASUREMENT METHOD, OBSERVATION DEVICE, AND PROGRAM**

(57)    A measurement method for measuring a state of a device in which components are lubricated with a lubricant, the method comprising: applying an alternating voltage to an electric circuit including the components to be lubricated with the lubricant; measuring the impedance and phase angle of the electric circuit when the alternating voltage is applied; and deriving an oil film thickness and a metallic contact ratio between the components on the basis of the impedance and the phase angle, wherein the oil film thickness and the metallic contact ratio between the components are derived by using a formula that defines the capacitance of a contact area between the components, according to the probability density function of surface roughness between the components in the contact area.

*FIG. 7A*

## FIG. 7B

**Description**

TECHNICAL FIELD

The present invention relates to a measurement method, a measurement device, and a program.

BACKGROUND ART

In the related art, in a rolling device such as a bearing device, a configuration for lubricating rotation of the rolling device by using a lubricant (for example, lubricating oil or grease) is widely used. On the other hand, a rotating component such as a bearing device is periodically subjected to state diagnosis, so that damage or wear is detected at an early stage and occurrence of a failure or the like of the rotating component is suppressed.

In the rolling device using the lubricant, it is required to appropriately detect an internal state in order to diagnose an operating state of the rolling device. For example, Patent Literature 1 discloses a method of, assuming that in a rolling device, a capacitance of an oil film of a contact surface having a surface roughness is equal to a capacitance of a smooth surface and as an oil film thickness of a contact surface which is not in metal contact is uniform in average oil film thickness, calculating a capacitance of the contact surface.

CITATION LIST

PATENT LITERATURE

Patent Literature 1: JP2019-211317A

SUMMARY OF INVENTION

TECHNICAL PROBLEM

However, since the capacitance is inversely proportional to the oil film thickness, an influence of a thin film portion is actually large, and the capacitance may be larger than that when it is assumed that the capacitance is uniform in the average oil film thickness. In the method of Patent Literature 1, the capacitance is calculated using the average oil film thickness, and therefore, when the oil film thickness of the contact surface deviates from the average oil film thickness, accuracy of a capacitance calculation result decreases. In particular, it is assumed that the oil film thickness is also affected by the surface roughness of the contact surface, resulting in a decrease in the accuracy of the capacitance calculation result.

In view of the above problems, an object of the present invention is to provide a measurement method for detecting an oil film thickness in a device and a metal contact ratio between components with higher accuracy than a method in the related art.

SOLUTION TO PROBLEM

In order to solve the above problems, the present invention has the following configuration. That is, a measurement method for measuring a state of a device in which lubrication between components is performed by a lubricant, the method comprising:

applying an AC voltage to an electric circuit formed of the components to be lubricated by the lubricant;
measuring an impedance of the electric circuit and a phase angle at the time of applying the AC voltage; and
deriving an oil film thickness and a metal contact ratio between the components based on the impedance and the phase angle, in which
the oil film thickness and the metal contact ratio between the components are derived by using a calculation formula in which a capacitance of the contact region is defined by a probability density function of a surface roughness between the components in a contact region between the components.

Another aspect of the present invention has the following configuration. That is, a measurement device for measuring a state of a device in which lubrication between components is performed by a lubricant, the device including:

an acquisition unit configured to apply an AC voltage to an electric circuit formed of the components to be lubricated by the lubricant, and to acquire an impedance of the electric circuit and a phase angle at the time of applying the AC voltage; and

a derivation unit configured to derive an oil film thickness and a metal contact ratio between the components based on the impedance and the phase angle, in which

the oil film thickness and the metal contact ratio between the components are derived by using a calculation formula in which a capacitance of the contact region is defined by a probability density function of a surface roughness between the components in a contact region between the components.

Another aspect of the present invention has the following configuration. That is, a program that causes a computer to function as the following:

an acquisition unit configured to apply an AC voltage to an electric circuit formed of components to be lubricated by a lubricant, and to acquire an impedance of the electric circuit and a phase angle at the time of applying the AC voltage; and

a derivation unit configured to derive an oil film thickness and a metal contact ratio between the components based on the impedance and the phase angle, in which

the oil film thickness and the metal contact ratio between the components are derived by using a calculation formula in which a capacitance of the contact region is defined by a probability density function of a surface roughness between the components in a contact region between the components.

ADVANTAGEOUS EFFECTS OF INVENTION

According to the present invention, it is possible to detect the oil film thickness in the device and the metal contact ratio between the components with higher accuracy than a method in the related art.

BRIEF DESCRIPTION OF DRAWINGS

[FIG. 1] FIG. 1 is a graph illustrating a physical model of a bearing device according to the present invention.
[FIG. 2] FIG. 2 is a graph illustrating a physical model of the bearing device according to the present invention.
[FIG. 3] FIG. 3 is a circuit diagram illustrating an equivalent circuit around a contact region according to the present invention.
[FIG. 4] FIG. 4 is a graph illustrating an analysis result according to a method in the related art.
[FIG. 5] FIG. 5 is a graph illustrating an analysis result according to the method in the related art.
[FIGS. 6A and 6B] FIGS. 6A and 6B are conceptual diagrams illustrating a state around the contact region according to the present invention.
[FIGS. 7A and 7B] FIGS. 7A and 7B are conceptual diagrams illustrating a contact distribution of the contact region according to the present invention.
[FIGS. 8A and 8B] FIGS. 8A and 8B are schematic diagrams illustrating a configuration example of a device to which a diagnosis method according to an embodiment of the present invention may be applied.
[FIG. 9] FIG. 9 is a flowchart of processing at the time of diagnosis according to the embodiment of the present invention.
[FIG. 10] FIG. 10 is a graph illustrating an analysis result by a diagnosis method according to the present invention.
[FIG. 11] FIG. 11 is a graph illustrating an analysis result by the diagnosis method according to the present invention.
[FIG. 12] FIG. 12 is a graph illustrating an analysis result by the diagnosis method according to the present invention.

DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby showing a correspondence relation therebetween.

<First Embodiment>

Hereinafter, a first embodiment of the present invention will be described. A measurement method according to the present invention may be applied to a device for rolling contact or sliding while a metal surface having constant roughness being lubricated. Examples of such a device include a rolling bearing, a gear, a sliding bearing, a cam, a traction drive device, and a continuously variable transmission (CVT). A specific application example will be described later, but the present invention is not limited thereto, and the present invention may be applied to any device having the above-described characteristics. Examples of a type of the rolling bearing to which a diagnosis method according to the present invention may be applied include a deep groove ball bearing, an angular contact ball bearing, a tapered roller bearing, a cylindrical roller bearing, and a self-aligning roller bearing.

[Physical Model]

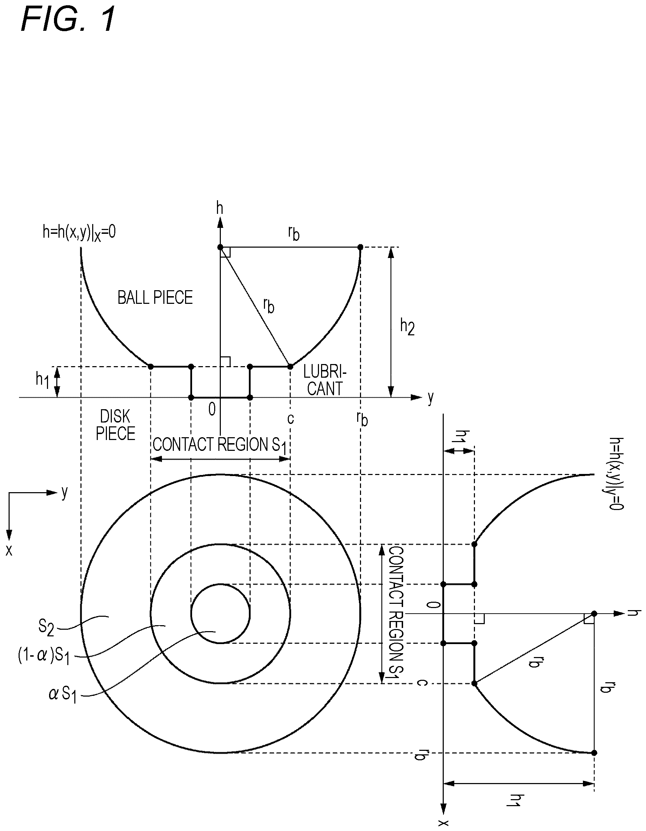

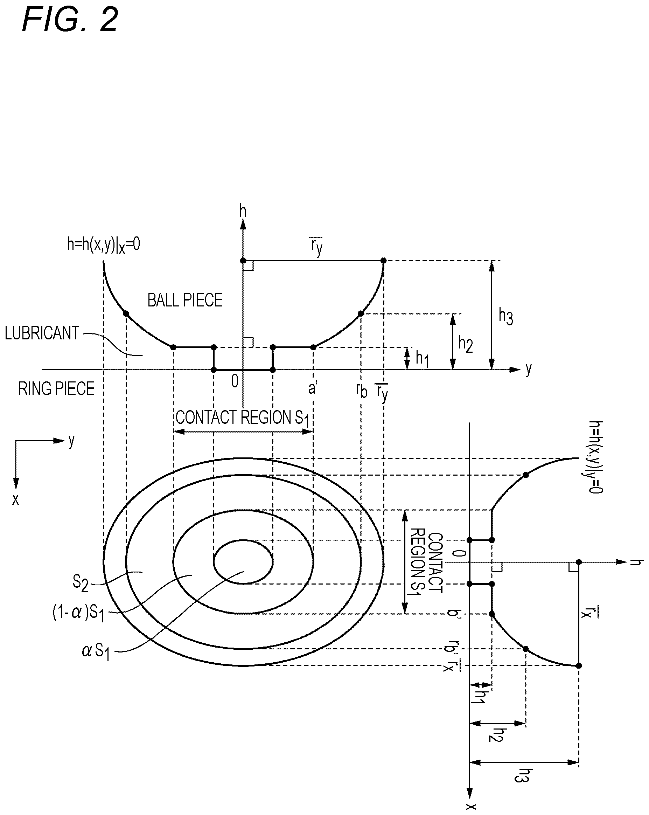

A contact state between components in a device to which a diagnosis method according to the present embodiment is applied will be described with reference to FIGS. 1 and 2. FIG. 1 illustrates a physical model in a case where circular contact is performed. FIG. 2 illustrates a physical model in a case where elliptical contact is performed. Since the basic concept is the same, the description will be made with reference to FIG. 1.

FIG. 1 is a graph illustrating a physical model when a ball piece and a disk piece are brought into rolling contact with each other in a device. A graph viewed from an x-axis direction is illustrated on an upper side of the drawing, and a graph viewed from a y-axis direction is illustrated on a right side of the drawing. Here, in order to simplify the description, an example is illustrated in which in contacting components, one component (ball piece) has a curved surface shape, the other component (disk piece) has a planar shape, and the ball piece and the disk piece are in contact with each other. However, both components may have a curved shape and may come into contact with each other. In such a configuration, the physical model illustrated in FIG. 2 is a more approximate model.

An h axis indicates an oil film thickness direction, and each of an x axis and a y axis indicates a direction orthogonal to the oil film thickness direction. Variables illustrated in FIG. 1 are as follows.

$S_1$: Hertzian contact area (Hertzian contact region)
C: Hertzian contact circle radius (= $\sqrt{(S_i/\pi)}$)
$\alpha$: breaking rate of oil film (metal contact ratio) ($0 \leq \alpha < 1$)
$r_b$: radius of ball piece
$\alpha S_1$: actual contact region (breaking region of oil film)
h: oil film thickness (x-axis direction, y-axis direction)
$h_1$: oil film thickness in Hertzian contact region
$h_2$: maximum oil film thickness in vicinity of contact region

In a Hertzian contact region, a ratio of an area where metals are in contact with an area where the metals are not in contact is $\alpha$: $(1 - \alpha)$. In an ideal state where the ball piece and the disk piece are not in contact with each other, $\alpha = 0$. At this time, when y = 0, h > 0. Similarly, when x = 0, h > 0.

In the graph at the upper side illustrated in FIG. 1, the oil film thickness h is expressed by the following formulas, for example.

$$h = 0 \ (-\alpha S_1/2 \leq y \leq \alpha S_1/2)$$

$$h = h_1 \ (-c \leq y < -\alpha S_1/2 \text{ or } \alpha S_1/2 < y \leq c)$$

$$h = h_1 + \sqrt{(r_b{}^2 - c^2)} - \sqrt{(r_b{}^2 - y^2)} \ (-r_b \leq y < -c \text{ or } c < y \leq r_b)\dots(1)$$

Similarly, in the graph on the right side illustrated in FIG. 1, the oil film thickness h is expressed by the following formulas.

$$h = 0 \ (-\alpha S_1/2 \leq x \leq \alpha S_1/2)$$

$$h = h_1 \ (-c \leq x < -\alpha S_1/2 \text{ or } \alpha S_1/2 < x \leq c)$$

$$h = h_1 + \sqrt{(r_b{}^2 - c^2)} - \sqrt{(r_b{}^2 - x^2)} \ (-r_b \leq x < -c \text{ or } c < x \leq r_b)\dots(2)$$

Variables in FIG. 2 are as follows.

a': Hertzian contact ellipse radius in y-axis direction
b': Hertzian contact ellipse radius in x-axis direction
$r_x{}^-$: ellipse radius of ball piece in x-axis direction
$r_y{}^-$: ellipse radius of ball piece in y-axis direction
$h_2$: thickness located in middle of maximum oil film thickness in vicinity of contact region

$h_3$: maximum oil film thickness in vicinity of contact region

When the physical model in FIG. 2 is used, the ball piece has an elliptical shape, and therefore, a part of the formulas are replaced accordingly. That is, although not described here, formulas of an ellipse may be applied when the model in FIG. 2 is used. Therefore, other calculation formulas may be used in accordance with the assumed physical model and a configuration of the target bearing device. Although two-dimensional calculation formulas have been given as an example as above, a three-dimensional calculation formula may be used.

[Equivalent Electric Circuit]

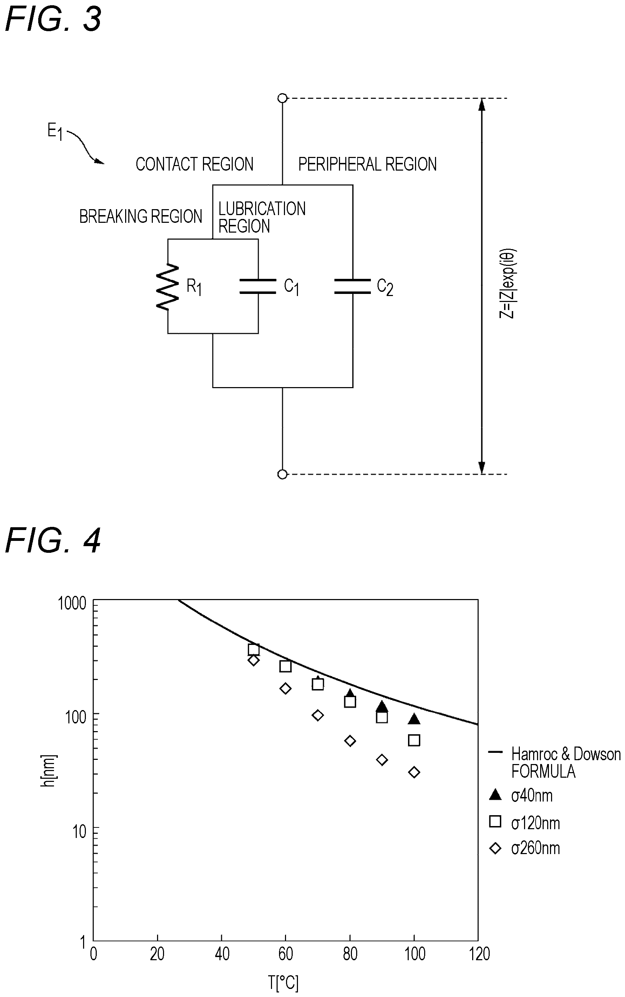

FIG. 3 is a diagram illustrating an electric circuit (equivalent circuit) electrically equivalent to the physical model illustrated in FIG. 1. The physical model in FIG. 2 has the same configuration. An equivalent circuit E1 includes a resistor $R_1$, a capacitor $C_1$, and a capacitor $C_2$. The resistor $R_1$ corresponds to a resistor in a breaking region (= $\alpha S_1$). The capacitor $C_1$ corresponds to a capacitor formed by an oil film in the Hertzian contact region, and has a capacitance $C_1$. The capacitor $C_2$ corresponds to a capacitor formed by an oil film in the vicinity of the Hertzian contact region (-$r_b \leq y < $-c and c $< y \leq r_b$, -$r_b \leq$ x < -c and c < x $\leq r_b$ in FIG. 1), and has a capacitance $C_2$. The Hertzian contact region (= $S_1$) forms a parallel circuit of the resistor $R_1$ and the capacitor $C_1$ in the equivalent circuit E1 of FIG. 3. The vicinity of the Hertizain contact region forms a circuit of the capacitor $C_2$ in the equivalent circuit E1 of FIG. 3. Further, the parallel circuits are connected in parallel to form the equivalent circuit E1. At this time, a lubricant is filled in the vicinity of the Hertzian contact region (-$r_b \leq y < $-c and c $< y \leq r_b$, -$r_b \leq$ x < -c and c < x $\leq r_b$ in FIG. 1).

An impedance of the equivalent circuit E1 is denoted by Z. Here, an AC voltage V applied to the equivalent circuit E1, a current I flowing through the equivalent circuit E1, and a complex impedance Z of the entire equivalent circuit E1 are expressed by the following Formulas (3) to (5).

$$V = |V|\exp(j\omega t)\ldots(3)$$

$$I = |I|\exp(j(\omega t - \theta))\ldots(4)$$

$$Z = V/I = |V/I|\exp(j\theta) = |Z|\exp(j\theta)\ldots(5)$$

j: imaginary number
$\omega$: angular frequency of AC voltage
t: time
$\theta$: phase angle (shift in phase of voltage and current)

[Overview of Impedance Method]

First, an impedance method in the related art to be compared will be briefly described before describing the diagnosis method according to the present embodiment. An impedance method used in Patent Literature 1 or the like is also a method based on the physical model and the equivalent circuit described above.

In the impedance method in the related art, the oil film thickness h and the metal contact ratio $\alpha$ are calculated from a complex impedance (Z, $\theta$) obtained by applying a voltage to a measurement target. As the oil film thickness h and the metal contact ratio $\alpha$, values calculated by the following formula can be used. In the following formula, an average oil film thickness in a contact region $S_1$ is used as the oil film thickness.

[Math. 1]

$$\alpha = \frac{R_{10}\cos\theta}{|Z|} \quad \cdot \cdot \cdot \ (6)$$

[Math. 2]

$$\bar{h} = \frac{(1-\alpha)^2 c^2}{2r_b} / W\left(\frac{(1-\alpha)c^2}{2r_b{}^2}\exp\left(1 - \frac{\sin\theta}{2\pi\varepsilon\omega r_b|Z|}\right)\right) \quad \cdot \cdot \cdot \ (7)$$

$R_{10}$: resistance value at rest (that is, $\alpha = 1$)
$\theta$: phase angle
$|Z|$: impedance of entire equivalent circuit in dynamic contact state
$\bar{h}$: average oil film thickness
c: radius of contact region
$r_b$: radius of ball piece
W(): Lambertian W function
exp(): exponential function
$\pi$: Pi
$\varepsilon$: dielectric constant of oil film (lubricant)
$\omega$: angular frequency of AC voltage

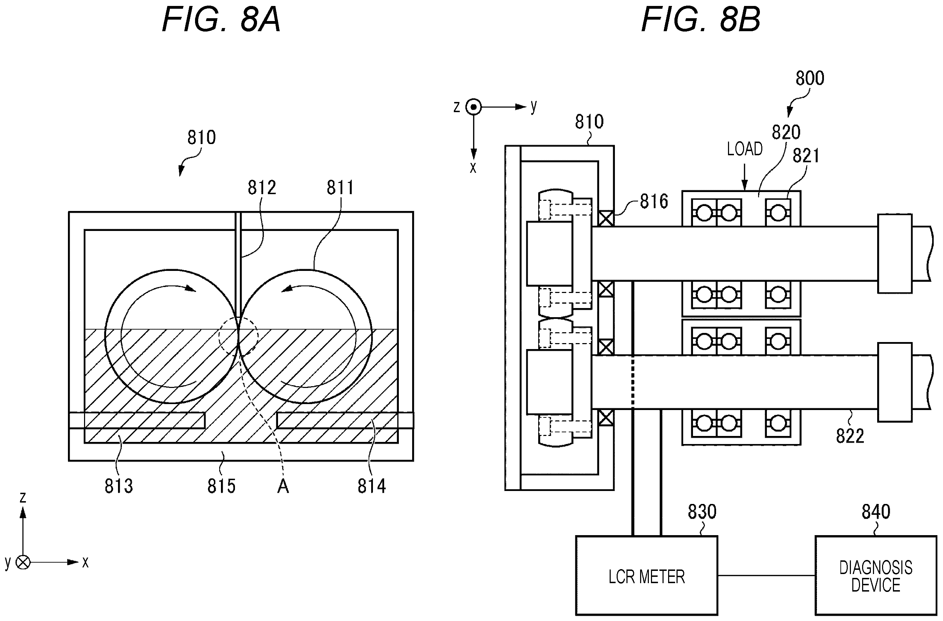

FIG. 4 is a semi-log graph illustrating results of performing a test with two cylinders using a device described later in FIGS. 8A and 8B and performing measurement by using the impedance method in the related art, and analysis results by known elasto-hydrodynamic lubrication ($\mu$EHL) analysis using an actual roughness after the test. Test conditions, measurement conditions, and analysis conditions are as follows.

(Test Conditions)

Lubricant viscosity (ISO viscosity classification): VG320
Surface pressure: 2.25 [GPa]
Pulling speed: 0.785 [m/s]
Sliding speed: 0 [m/s]
Temperature: 50 to 100 [°C]
Synthetic roughness ($\sigma$): 40, 120, 260 [nm]

(Impedance Measurement Conditions)

Applied voltage: 0.5 [V]
AC frequency: 1 [MHz]

(Analysis Conditions)

Input roughness: 2.9 $\times$ 1.6 [mm] ($\Delta x \approx 1.6$ $\mu$m)
Mesh size: 512 $\times$ 512 ($\Delta x \approx 3$ $\mu$m)
Calculation region: -2.5a to 1.5a, -1.75b to 1.75b

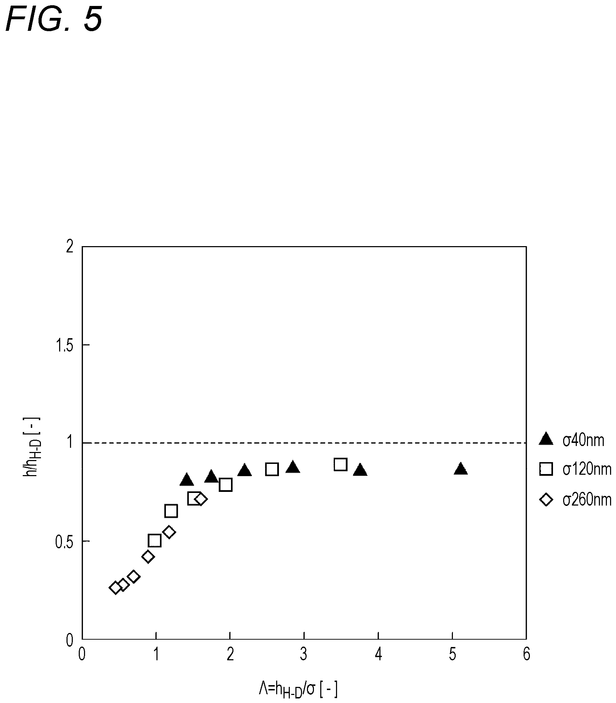

In FIG. 4, a horizontal axis represents the temperature T [°C], and a vertical axis represents the oil film thickness h [nm]. In addition, as a comparative example, a calculation result according to a known Hamroc & Dowson film thickness calculation formula (hereinafter referred to as "H-D formula") is indicated by a solid line. As described above, here, the test is performed using three surface roughness ($\sigma$ = 40, 120, 260 [nm]). As the surface roughness herein, the synthetic roughness of each contact surface is used.
First, focusing on the measurement result by the impedance method in the related art, the measurement value tends to be smaller than the calculation result of the H-D formula as the temperature increases, which becomes significant as the surface becomes rougher. Further, as the temperature increases, the measurement result of the impedance method in the related art deviates from the calculation result of the H-D formula.
Next, the influence of roughness is examined. Here, a ratio of a calculated oil film thickness $h_{H-D}$ obtained by the H-D formula to the roughness $\sigma$ is A (= $h_{H-D}/\sigma$). FIG. 5 illustrates the calculation result of FIG. 4 from another viewpoint. In FIG. 5, a horizontal axis represents A, and a vertical axis represents a ratio of the oil film thickness h calculated by the impedance method in the related art to the calculated oil film thickness $h_{H-D}$. According to FIG. 5, in a range of $3 \leq A$, the same calculation results are obtained for each roughness, indicating that the influence of the roughness is small, and the ratio of the oil film thickness h calculated by the impedance method in the related art to $h_{H-D}$ is approximately 1. However, the influence of the roughness increases as A decreases. That is, the calculated film thickness h is smaller than the calculated oil film thickness $h_{H-D}$ ($h/h_{H-D}$ becomes smaller).

Here, the present invention focuses on the roughness of the contact region. In particular, a method of improving the impedance method in the related art is proposed on the assumption that the influence of the roughness such that the value of A is equal to or less than a certain value is large, as illustrated in FIG. 5.

[Handling of Roughness]

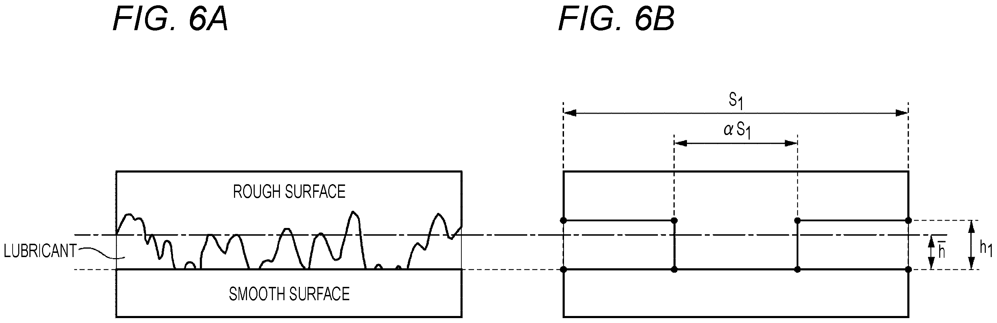

First, the handling of the roughness of the contact region $S_1$ in the impedance method in the related art will be described. FIGS. 6A and 6B are a schematic diagram around a contact region for explaining surface roughness in the impedance method in the related art. As illustrated in FIG. 1, in the contact region S1, two members (here, ball piece and disk piece) are in contact with each other, and a lubricant is filled around the two members. (a) of FIG. 6 illustrates an actual mixed lubrication state. Here, in order to simplify the description, description will be made on the assumption that a surface of the ball piece is rough and the disk piece is smooth as indicated by the synthetic roughness.

With respect to the state in FIG. 6A, FIG. 6B illustrates a geometric model used in the impedance method in the related art. In the impedance method in the related art, measurement is performed by treating the state of FIG. 6A as a state equivalent to the geometric model as illustrated in FIG. 6B. That is, the average oil film thickness h⁻ which is an average of the oil film thickness h in the contact region $S_1$ is used.

A capacitance $C_a$ corresponding to the model of FIG. 6A can be calculated by the following formula.
[Math. 3]

$$C_a = \iint \frac{\varepsilon}{h} dx\, dy \quad \cdots \quad (8)$$

A capacitance $C_b$ corresponding to the geometric model of FIG. 6B can be calculated by the following formula.
[Math. 4]

$$C_b = \frac{\varepsilon(1-\alpha)S_1}{h_1} \quad \cdots \quad (9)$$

Actual values of $C_a$ and $C_b$ are different, and $C_a > C_b$. In the impedance method in the related art, the oil film thickness $h_1$ and the average oil film thickness h⁻ are calculated by the following Formulas (10) and (11).
[Math. 5]

$$h_1 = \frac{\varepsilon(1-\alpha)S_1}{C_b} \quad \cdots \quad (10)$$

[Math. 6]

$$\overline{h} = (1-\alpha)h_1 \quad \cdots \quad (11)$$

When $C_a > C_b$, in a case where $h_1$ is calculated using $C_a$ instead of $C_b$, the calculated oil film thickness is naturally different. Therefore, the accuracy of the calculated oil film thickness decreases as the values of $C_a$ and $C_b$ deviate due to the influence of the roughness.

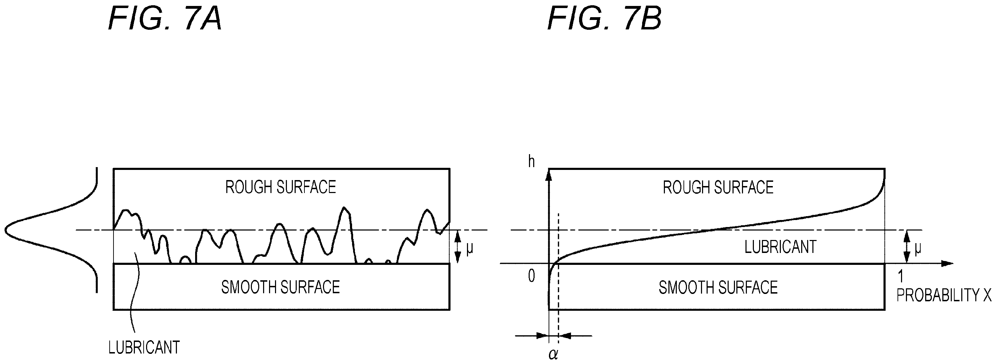

Here, in the present embodiment, the surface roughness around the contact region is taken into consideration by treating as follows. FIGS. 7A and 7B are a schematic diagram around a contact region for explaining the surface roughness in the impedance method according to the present invention. As illustrated in FIG. 1, in the contact region $S_1$, two members (here, ball piece and disk piece) are in contact with each other, and a lubricant is filled around the two members. FIG. 7A illustrates an actual mixed lubrication state. Here, in order to simplify the description, description will be made on the assumption that a surface of the ball piece is rough and the disk piece is smooth as indicated by the synthetic roughness.

In contrast to the state of FIG. 6A, in the present embodiment, a formula considering the surface roughness is defined on the assumption that the surface roughness is a normal distribution. That is, a probability density of an interval between two planes when a Gaussian distribution is assumed is calculated by the following formula.
[Math. 7]

$$f(h) = \frac{1}{\sqrt{2\pi\sigma^2}} \exp\left(-\frac{(h-\mu)^2}{2\sigma^2}\right) \quad \cdots \quad (1\,2)$$

FIG. 7B is a graph illustrating a relation between a film thickness when it is assumed that the surface roughness is normally distributed and an occurrence probability. In FIG. 7B, a vertical axis indicates the film thickness h, and a horizontal axis indicates the occurrence probability. As described with reference to FIG. 1, $\alpha$ corresponds to a breaking rate of the oil film. Here, the surface roughness, that is, the oil film thickness distribution is expressed by an inverse function of the following cumulative distribution function.

[Math. 8]

$$h(F) = \mu + \sqrt{2}\sigma \, \mathrm{erf}^{-1}(2F - 1) \quad \cdots \quad (1\,3)$$

F: cumulative distribution probability (0 to 1)

A region where the oil film is present is a region of h > 0, and by subjecting $\varepsilon/h$ to surface integral in this region, the capacitance $C_1$ of the contact surface can be calculated by the following formula by the following Formula (14).

[Math. 9]

$$C_1 = \int_\alpha^1 \frac{\varepsilon S_1}{\mu + \sqrt{2}\sigma \, \mathrm{erf}^{-1}(2F-1)} \, dF \quad \cdots \quad (1\,4)$$

Here, handling is not easy in the state of the above Formula (14). In the present embodiment, the above formula is approximated and converted as follows to suppress a calculation load while implementing a certain level of measurement accuracy for the oil film thickness $\mu$. Formula (15) is an approximation formula by Taylor expansion. Formula (16) is an approximation formula of $C_1$ obtained by converting Formula (14) based on Formula (15).

[Math. 10]

$$erf^{-1}(z) = \frac{\sqrt{\pi}}{2}\left(z + \frac{\pi}{12}z^3 + \frac{7\pi^2}{480}z^5 + +\frac{7\pi^3}{40320}z^7 + \cdots\right) \approx \frac{\sqrt{\pi}}{2}z \quad \cdots \quad (1\,5)$$

[Math. 11]

$$C_1 \approx \int_\alpha^1 \frac{\varepsilon S_1}{\mu + \sqrt{\frac{\pi}{2}}\sigma(2F-1)} dF = \frac{\varepsilon S_1}{\sqrt{2\pi}\sigma} \ln\left|\frac{\frac{1}{2} + \frac{\mu}{\sqrt{2\pi}\sigma}}{\left(\alpha - \frac{1}{2}\right) + \frac{\mu}{\sqrt{2\pi}\sigma}}\right| \quad \cdots \quad (1\,6)$$

[Math. 12]

$$\mu = \sqrt{2\pi}\sigma\left(\frac{1}{2} - \frac{1 - \alpha\gamma}{1 - \gamma}\right) \quad \cdots \quad (1\,7)$$

[Math. 13]

$$\gamma = \exp\left(\frac{\sqrt{2\pi}\sigma C_1}{\varepsilon S_1}\right) \quad \cdots \quad (1\,8)$$

At this time, Formula (18) becomes the following Formula (20) by the following Formula (19).

[Math. 14]

$$C_1 = \frac{\varepsilon(1 - \alpha)S_1}{h_1} \quad \cdots \quad (1\,9)$$

[Math. 15]

$$\gamma = \exp\left(\frac{\sqrt{2\pi}\sigma(1-\alpha)}{h_1}\right) \quad \cdots \quad (20)$$

Accordingly, in the present embodiment, the oil film thickness $\mu$ in the contact region $S_1$ is determined by using the Formulas (17) and (20).

As described above, in the present embodiment, the smooth surface and the rough surface are in contact with each other, and a standard deviation of the surface roughness of the rough surface, that is, a root mean square roughness $R_q$, is used as $\sigma$. In a case where both surfaces to be brought into contact are rough surfaces, it can be taken as a contact between a rough surface having synthesized roughness and a smooth surface. In this case, when the roughness of each of the two rough surfaces is denoted by $\sigma_1$ and $\sigma_2$, the synthetic surface roughness can be calculated by the following formula.

[Math. 16]

$$\sigma = \sqrt{\sigma_1{}^2 + \sigma_2{}^2} \quad \cdots \quad (21)$$

In the above description, a line roughness $R_q$ is taken as an example, but a surface roughness $S_q$ may also be applied based on the same idea.

In the present embodiment, the probability density function is defined on the assumption that the surface roughness is a Gaussian distribution. However, the present invention is not limited thereto, the definition may be performed assuming a distribution other than the Gaussian distribution as long as the distribution of the surface roughness can be defined, and the definition may be applied. In a case other than the Gaussian distribution, the capacitance $C_1$ can be calculated using the following Formula (22).

[Math. 17]

$$C_1 = \int_{\alpha}^{1} \frac{\varepsilon S_1}{h(F)} dF \quad \cdots \quad (22)$$

As described above, the distribution of surface roughness may be expressed using approximation. Which formula is used, such as Formula (17), Formula (20), or Formula (22), may be switched in accordance with the configuration of the rolling device to be diagnosed. That is, the allowable accuracy and processing load may be different depending on the configuration of the rolling device and the purpose of diagnosis, and therefore, the above formulas may be selectively used.

[Application Example]

Hereinafter, an application example in which the diagnosis method according to the present embodiment is used will be described.

[Device Configuration]

FIGS. 8A and 8B are a schematic configuration diagram illustrating an example of an overall configuration when the diagnosis method according to the present embodiment is applied. FIG. 8A is a view of a rolling device 800 as viewed along a y-axis direction, and here, illustrates an outline of the inside of a coupling portion 810 that constitutes the rolling device 800. FIG. 8B is a view of the rolling device 800 as viewed along a z-axis direction orthogonal to the y-axis direction. In FIGS. 8A and 8B, the rolling device 800 to be diagnosed, an LCR meter 830, and a diagnosis device 840 that performs diagnosis are provided. The configuration illustrated in FIGS. 8A and 8B are an example, and different configurations may be used according to the configuration of the rolling device 800 and the like.

The rolling device 800 includes two rotary shafts 822 each being a cylindrical shaft partially including an insulating joint. The rotary shaft 822 is provided with a bearing portion 820 including a plurality of rolling bearings 821. In the example of FIGS. 8A and 8B, three rolling bearings 821 (here, ball bearings) are rotatably provided on each of the rotary shafts 822. It is assumed that a load is applied to the bearing portion 820 from a certain direction. The rotary shafts 822 are inserted into the coupling portion 810 and rotate in conjunction with each other thereinside. Although not illustrated in FIGS. 8A and 8B, a driving motor serving as a power source of the rotary shaft 822 is connected to one or both of the two cylinders. In the example of FIG. 8A, the right cylinder rotates counterclockwise, and the left cylinder rotates clockwise. A seal 816 for preventing leakage of a lubricant 813 filled in the coupling portion 810 and entry of dust is provided in a portion where the rotary shaft 822 is inserted.

Contact members 811 provided at distal end portions of the rotary shafts 822 come into contact with each other at a position A inside the coupling portion 810. A thermocouple 812 is provided in the coupling portion 810, and is capable of measuring an ambient temperature of the position A. A chamber 815 is filled with the lubricant 813 to reduce friction of a contact region at the position A. A lubrication method is not particularly limited, and for example, grease lubrication or oil lubrication is used. A type of the lubricant is also not particularly limited. A heater 814 capable of adjusting a temperature inside the chamber 815 is provided.

The rotary shaft 822 is connected to the LCR meter 830 via a rotary connector (not illustrated). A configuration of the rotary connector is not particularly limited. The LCR meter 830 is also electrically connected to the contact member 811 and also functions as an AC power supply for the contact member 811.

The diagnosis device 840 operates as a detection device that is capable of executing the detection method according to the present embodiment. At the time of diagnosis, the diagnosis device 840 instructs the LCR meter 830, as inputs, the angular frequency $\omega$ of the AC power supply and the AC voltage V, and acquires, as outputs corresponding thereto, the impedance |Z| (|Z| is an absolute value of Z) of the rolling device 800 and the phase angle $\theta$ from the LCR meter 830. Then, the diagnosis device 840 performs diagnosis for the rolling device 800 using the above values.

The diagnosis device 840 may be implemented by, for example, an information processing device including a control device (not illustrated), a storage device (not illustrated), and an output device (not illustrated). The control device may include a central processing unit (CPU), a micro processing unit (MPU), a digital single processor (DSP), or a dedicated circuit. The storage device includes volatile and nonvolatile storage media such as a hard disk drive (HDD), a read only memory (ROM), and a random access memory (RAM), and may input and output various kinds of information in response to an instruction from the control device. The output device includes a speaker, a light, or a display device such as a liquid crystal display, and performs notification to an operator in response to the instruction from the control device. A notification method by the output device is not particularly limited, and for example, may be an auditory notification by voice or a visual notification by screen output. The output device may be a network interface having a communication function, and may perform a notification operation by transmitting data to an external device (not illustrated) via a network (not illustrated). For example, when abnormality diagnosis is performed based on a detection result, a notification content is not limited to a notification when an abnormality is detected, and may include a notification indicating that the rolling device 800 is normal.

[Processing Flow]

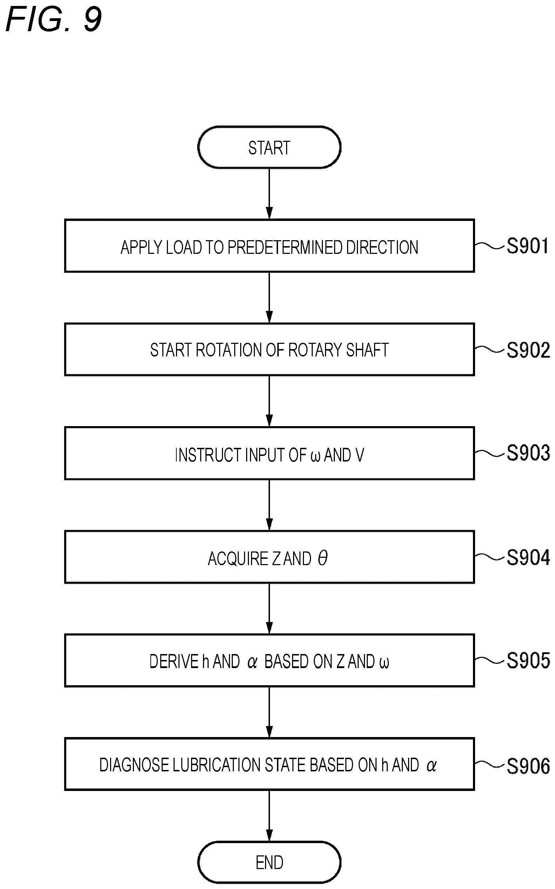

FIG. 9 is a flowchart of diagnosis processing according to the present embodiment. The processing is executed by the diagnosis device 840, and may be implemented by, for example, the control device (not illustrated) included in the diagnosis device 840 reading out a program for implementing the processing according to the present embodiment from the storage device (not illustrated) and executing the program.

In S901, the diagnosis device 840 controls the rolling device 800 to apply a load in a predetermined direction. In this example, control is performed such that a load is applied to the bearing portion 820 in a direction indicated by an arrow in FIGS. 8A and 8B. The control of applying a load may be performed by a device other than the diagnosis device 840. At this time, a phase and an impedance in a static contact state are measured.

In step S902, the diagnosis device 840 causes a motor (not illustrated) to start rotation of the rotary shaft 822. The motor may be controlled by a device other than the diagnosis device 840.

In step S903, the diagnosis device 840 controls the LCR meter 830 to supply the AC voltage V of the angular frequency $\omega$ to the rolling device 800 by using an AC power supply (not illustrated) included in the LCR meter 830. Accordingly, the AC voltage V of the angular frequency $\omega$ is applied to the rolling device 800.

In step S904, the diagnosis device 840 acquires the impedance |Z| and the phase angle $\theta$ from the LCR meter 830 as the output corresponding to the input in S903. That is, the LCR meter 830 outputs the impedance |Z| and the phase angle $\theta$ to the diagnosis device 840 as a detection result of the rolling device 800 with respect to the AC voltage V and the angular frequency $\omega$ of the AC voltage which are inputs.

In S905, the diagnosis device 840 derives the oil film thickness h and the breaking rate $\alpha$ by applying, to each formula described above, the impedance |Z| and the phase angle $\theta$ acquired in S904 and the angular frequency $\omega$ of the AC voltage used in S903.

In S906, the diagnosis device 840 diagnoses a lubrication state of the rolling device 800 using the oil film thickness h and the breaking rate $\alpha$ derived in S905. In the diagnosis method here, for example, a threshold may be provided for the oil film thickness h or the breaking rate $\alpha$, and the lubrication state may be determined based on comparison with the threshold. Then, the processing flow ends.

[Measurement Results]

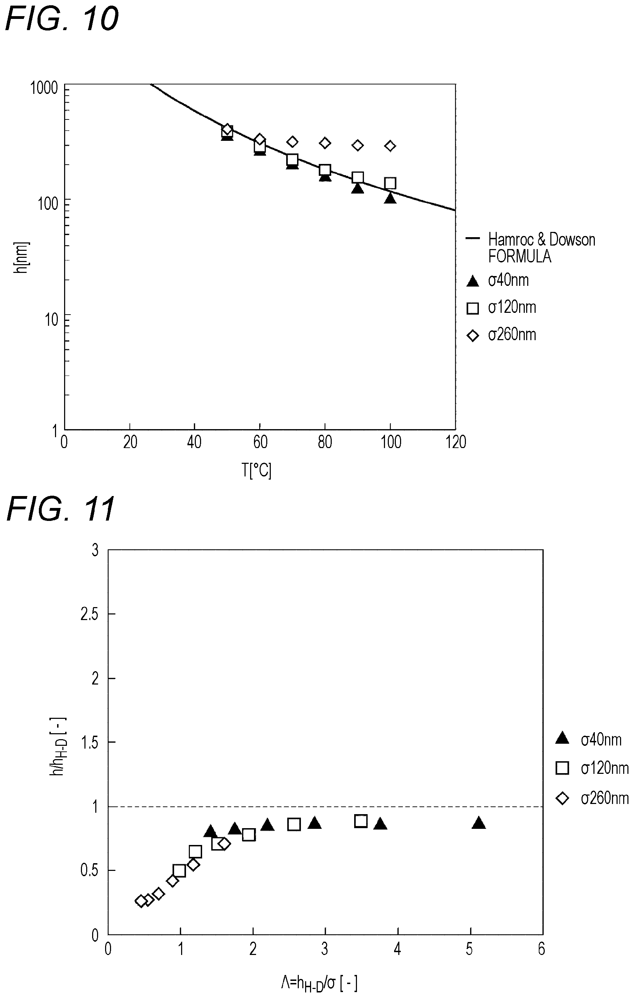

Hereinafter, a measurement result by the measurement method according to the present embodiment will be described with reference to FIGS. 10 to 12. FIG. 10 is a semi-log graph illustrating the measurement result obtained by performing a test using the measurement method according to the present embodiment and the calculation result of the H-D formula. The test conditions are the same as those described with reference to FIGS. 4 and 5. In FIG. 10, a horizontal axis represents the temperature T [°C], and a vertical axis represents the oil film thickness h. As in FIG. 4, an example of three synthetic roughness $\sigma$ is used here ($\sigma$ = 40, 120, 260 [nm]).

Referring to FIG. 10, when the synthetic roughness is $\sigma$ = 40 and $\sigma$ = 120, a value generally equivalent to the calculated oil film thickness according to the H-D formula can be derived at any temperature. When the synthetic roughness is $\sigma$ = 260, a value higher than the calculated oil film thickness is derived, and converges to a value of about 300 nm, which is approximately the same value as $\sigma$. It is considered that this suggests that, in a case where roughness is present, the oil film does not become smaller than the roughness caused by contact with protrusions due to the roughness of the surface. Therefore, it is considered that the measurement result by the method according to the present embodiment is valid.

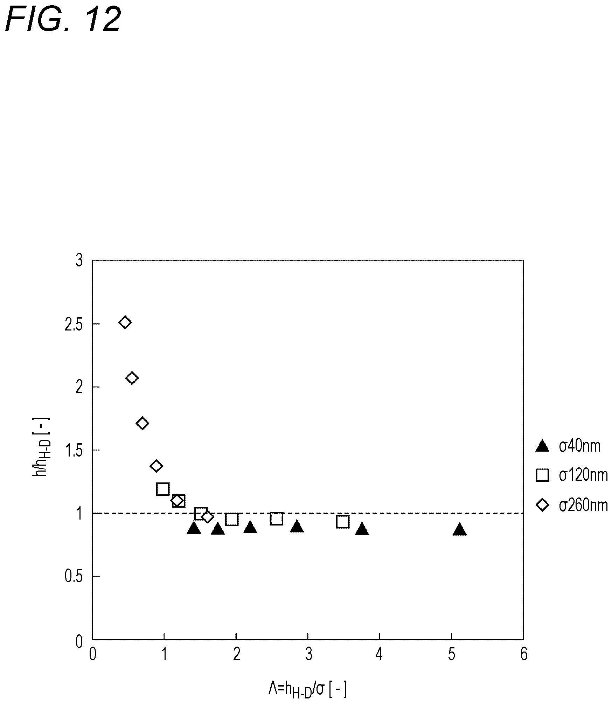

FIG. 12 illustrates the calculation result of FIG. 10 from another viewpoint, and corresponds to FIG. 5. Here, FIG. 11 illustrates the graph of FIG. 5 in accordance with a scale (vertical axis) of FIG. 12. In FIG. 12, a horizontal axis represents A, and a vertical axis represents the ratio of the oil film thickness h calculated by the measurement method according to the present embodiment to the calculated oil film thickness $h_{H-D}$. Referring to FIG. 11 (and FIG. 5) according to the method in the related art and FIG. 12 according to this method, the oil film thickness is calculated to be small in a region (A < 3) where A is small in the method in the related art. This is considered to be because the increase in the capacitance of the contact surface due to the influence of roughness is not taken into consideration. On the other hand, in the method according to the present embodiment, a value close to the calculated oil film thickness can be calculated in a wider region (more specifically, 1 < A < 3) than in the method in the related art.

As illustrated in FIG. 12, in the region of A < 1, the value of $h/h_{H-D}$ is larger than 1. It is considered to be because the oil film thickness (that is, distance between two surfaces) does not become smaller due to the influence of roughness, and the actual oil film thickness is larger than $h_{H-D}$ which is the calculation result on the smooth surface. Therefore, it is considered that the measurement result by the method according to the present embodiment is valid.

As described above, according to the present embodiment, it is possible to detect the oil film thickness of the device and the metal contact ratio between the components with higher accuracy than the method in the related art.

<Other Embodiments>

In the present invention, a program or an application for implementing functions of the one or more embodiments described above may be supplied to a system or a device using a network or a storage medium, and processing in which one or more processors in the system or the device may read and execute the program may be implemented.

In addition, it may be implemented by a circuit (for example, application specific integrated circuit (ASIC) or field programmable gate array (FPGA)) that implements one or more functions.

As described above, the present invention is not limited to the above-described embodiments, and combinations of the respective configurations of the embodiments and changes and modifications made by those skilled in the art based on the descriptions in the description and the well-known technique are intended by the present invention and are thus also included within the scope of the present invention to be protected.

As described above, the following matters are disclosed in the present description.

(1) A measurement method for measuring a state of a device in which lubrication between components is performed by a lubricant, the method including:

applying an AC voltage to an electric circuit formed of the components to be lubricated by the lubricant;
measuring an impedance of the electric circuit and a phase angle at the time of applying the AC voltage; and
deriving an oil film thickness and a metal contact ratio between the components based on the impedance and the phase angle, in which
the oil film thickness and the metal contact ratio between the components are derived by using a calculation formula in which a capacitance of the contact region is defined by a probability density function of a surface roughness between the components in a contact region between the components.
With this configuration, it is possible to detect the oil film thickness of the device and the metal contact ratio between the components with higher accuracy than the method in the related art.

(2) The measurement method according to (1), in which

the calculation formula for deriving a capacitance $C_1$ of the contact region is as follows.

[Math. 18]

$$C_1 = \int_\alpha^1 \frac{\varepsilon S_1}{h(F)} dF$$

With this configuration, the capacitance of the contact region can be calculated with high accuracy based on the distribution of the roughness of the contact region.

(3) The measurement method according to (1), in which

the calculation formula is a calculation formula in which the surface roughness between the components is defined by a Gaussian distribution.
With this configuration, it is possible to calculate the capacitance of the contact region with high accuracy by using the Gaussian distribution as the distribution of the roughness of the contact region.

(4) The measurement method according to (3), in which

the calculation formula for deriving the capacitance $C_1$ of the contact region is as follows.

[Math. 19]

$$C_1 = \int_\alpha^1 \frac{\varepsilon S_1}{\mu + \sqrt{2}\sigma \, \mathrm{erf}^{-1}(2F - 1)} dF$$

With this configuration, it is possible to calculate the capacitance of the contact region with high accuracy by using the Gaussian distribution as the distribution of the roughness of the contact region.
The measurement method according to (4), in which
the calculation formula for deriving the oil film thickness $\mu$ is as follows.

[Math. 20]

$$\mu = \sqrt{2\pi}\sigma \left(\frac{1}{2} - \frac{1 - \alpha\gamma}{1 - \gamma}\right)$$

[Math. 21]

$$\gamma = \exp\left(\frac{\sqrt{2\pi}\sigma(1 - \alpha)}{h_1}\right)$$

With this configuration, it is possible to calculate the capacitance of the contact region with high accuracy by using the Gaussian distribution as the distribution of the roughness of the contact region.

(6) The measurement method according to any of (1) to (5), further including:

diagnosing a state of the device by using the oil film thickness and the metal contact ratio.
With this configuration, it is possible to diagnose a device using an oil film thickness and a metal contact ratio with higher accuracy than in the related art.

(7) A measurement device for measuring a state of a device in which lubrication between components is performed by a lubricant, the device including:

an acquisition unit configured to apply an AC voltage to an electric circuit formed of the components to be lubricated by the lubricant, and to acquire an impedance of the electric circuit and a phase angle at the time of applying the AC voltage; and

a derivation unit configured to derive an oil film thickness and a metal contact ratio between the components based on the impedance and the phase angle, in which

the oil film thickness and the metal contact ratio between the components are derived by using a calculation formula in which a capacitance of the contact region is defined by a probability density function of a surface roughness between the components in a contact region between the components.

With this configuration, it is possible to detect the oil film thickness of the device and the metal contact ratio between the components with higher accuracy than the method in the related art.

(8) A program that causes a computer to function as the following:

an acquisition unit configured to apply an AC voltage to an electric circuit formed of components to be lubricated by a lubricant, and to acquire an impedance of the electric circuit and a phase angle at the time of applying the AC voltage, and

a derivation unit configured to derive an oil film thickness and a metal contact ratio between the components based on the impedance and the phase angle, in which

the oil film thickness and the metal contact ratio between the components are derived by using a calculation formula in which a capacitance of the contact region is defined by a probability density function of a surface roughness between the components in a contact region between the components.

With this configuration, it is possible to detect the oil film thickness of the device and the metal contact ratio between the components with higher accuracy than the method in the related art.

Although the embodiment and the variation thereof are described above with reference to the drawings, it is needless to mention that the present invention is not limited to these examples. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

Although various embodiments have been described above, it is needless to mention that the present invention is not limited to such embodiments. It is apparent for those skilled in the art to which the present disclosure belongs that various modified examples or corrected examples are conceivable within the scope recited in the claims, and it is understood that the above falls within the technical scope of the present invention. In addition, the components described in the above embodiments may be combined in any manner without departing from the spirit of the invention.

The present application is based on a Japanese patent application (No. 2022-039415) filed on March 14, 2022, contents of which are incorporated herein by reference.

REFERENCE SIGNS LIST

800 rolling device
810 coupling portion
811 contact member
812 thermocouple
813 lubricant
814 heater
815 chamber
816 seal
820 bearing portion
821 rolling bearing
822 rotary shaft
830 LCR meter
840 diagnosis device

**Claims**

1. A measurement method for measuring a state of a device in which lubrication between components is performed by a lubricant, the method comprising:

   applying an AC voltage to an electric circuit formed of the components to be lubricated by the lubricant;
   measuring an impedance of the electric circuit and a phase angle at the time of applying the AC voltage; and
   deriving an oil film thickness and a metal contact ratio between the components based on the impedance and the phase angle, wherein
   the oil film thickness and the metal contact ratio between the components are derived by using a calculation formula in which a capacitance of the contact region is defined by a probability density function of a surface roughness between the components in a contact region between the components.

2. The measurement method according to claim 1, wherein
   the calculation formula for deriving a capacitance $C_1$ of the contact region is as follows:

   [Math. 1]

   $$C_1 = \int_\alpha^1 \frac{\varepsilon S_1}{\mathrm{h}(F)} \, dF$$

   where

   $S_1$: Hertzian contact area (Hertzian contact region)
   $\alpha$: breaking rate (metal contact ratio) of oil film ($0 \leq \alpha < 1$)
   $\varepsilon$: dielectric constant of oil film (lubricant)
   $\mathrm{h}(F)$: oil film thickness distribution
   $F$: cumulative distribution probability (0 to 1).

3. The measurement method according to claim 1, wherein
   the calculation formula is a calculation formula in which the surface roughness between the components is defined by a Gaussian distribution.

4. The measurement method according to claim 3, wherein
   the calculation formula for deriving the capacitance $C_1$ of the contact region is as follows:

   [Math. 2]

   $$C_1 = \int_\alpha^1 \frac{\varepsilon S_1}{\mu + \sqrt{2}\sigma \, \mathrm{erf}^{-1}(2F - 1)} \, dF$$

   where

   $S_1$: Hertzian contact area (Hertzian contact region)
   $\alpha$: breaking rate (metal contact ratio) of oil film ($0 \leq \alpha < 1$)
   $\varepsilon$: dielectric constant of oil film (lubricant)
   $F$: cumulative distribution probability (0 to 1)
   $\mu$: oil film thickness
   $\sigma$: surface roughness.

5. The measurement method according to claim 4, wherein
   the calculation formula for deriving the oil film thickness $\mu$ is as follows:

[Math. 3]

$$\mu = \sqrt{2\pi}\sigma \left( \frac{1}{2} - \frac{1 - \alpha\gamma}{1 - \gamma} \right)$$

$$\gamma = \exp\left( \frac{\sqrt{2\pi}\sigma(1 - \alpha)}{h_1} \right)$$

where
$h_1$: oil film thickness.

6. The measurement method according to any of claims 1 to 5, further comprising:
diagnosing a state of the device by using the oil film thickness and the metal contact ratio.

7. A measurement device for measuring a state of a device in which lubrication between components is performed by a lubricant, the device comprising:

an acquisition unit configured to apply an AC voltage to an electric circuit formed of the components to be lubricated by the lubricant, and to acquire an impedance of the electric circuit and a phase angle at the time of applying the AC voltage; and
a derivation unit configured to derive an oil film thickness and a metal contact ratio between the components based on the impedance and the phase angle, wherein
the oil film thickness and the metal contact ratio between the components are derived by using a calculation formula in which a capacitance of the contact region is defined by a probability density function of a surface roughness between the components in a contact region between the components.

8. A program that causes a computer to function as the following:

an acquisition unit configured to apply an AC voltage to an electric circuit formed of components to be lubricated by a lubricant, and to acquire an impedance of the electric circuit and a phase angle at the time of applying the AC voltage, and
a derivation unit configured to derive an oil film thickness and a metal contact ratio between the components based on the impedance and the phase angle, wherein
the oil film thickness and the metal contact ratio between the components are derived by using a calculation formula in which a capacitance of the contact region is defined by a probability density function of a surface roughness between the components in a contact region between the components.

## FIG. 1

# FIG. 2

## FIG. 3

## FIG. 4

FIG. 5

EP 4 495 568 A1

## FIG. 6A

LUBRICANT

ROUGH SURFACE

SMOOTH SURFACE

## FIG. 6B

$S_1$

$\alpha S_1$

$\overline{h}$

$h_1$

FIG. 7A

FIG. 7B

ROUGH SURFACE

SMOOTH SURFACE

LUBRICANT

μ

h

ROUGH SURFACE

LUBRICANT

SMOOTH SURFACE

0

1

PROBABILITY X

μ

α

EP 4 495 568 A1

FIG. 8A

FIG. 8B

810

812 811

813  815  A  814

z
y⊗——x

z⊙——y
x

810

816

LOAD
820
821

822

800

830
LCR METER

840
DIAGNOSIS DEVICE

EP 4 495 568 A1

23

## FIG. 9

```
                    START
                      │
                      ▼
┌─────────────────────────────────────────────┐
│  APPLY LOAD TO PREDETERMINED DIRECTION       │──── S901
└─────────────────────────────────────────────┘
                      │
                      ▼
┌─────────────────────────────────────────────┐
│  START ROTATION OF ROTARY SHAFT              │──── S902
└─────────────────────────────────────────────┘
                      │
                      ▼
┌─────────────────────────────────────────────┐
│  INSTRUCT INPUT OF ω AND V                    │──── S903
└─────────────────────────────────────────────┘
                      │
                      ▼
┌─────────────────────────────────────────────┐
│  ACQUIRE Z AND θ                              │──── S904
└─────────────────────────────────────────────┘
                      │
                      ▼
┌─────────────────────────────────────────────┐
│  DERIVE h AND α BASED ON Z AND ω              │──── S905
└─────────────────────────────────────────────┘
                      │
                      ▼
┌─────────────────────────────────────────────┐
│  DIAGNOSE LUBRICATION STATE BASED ON h AND α  │──── S906
└─────────────────────────────────────────────┘
                      │
                      ▼
                    END
```

## FIG. 10

## FIG. 11

FIG. 12

## INTERNATIONAL SEARCH REPORT

International application No.

**PCT/JP2023/008683**

### A. CLASSIFICATION OF SUBJECT MATTER

***G01M 13/04***(2019.01)i; ***F16C 19/52***(2006.01)i; ***G01N 27/02***(2006.01)i
FI: G01M13/04; F16C19/52; G01N27/02 Z

According to International Patent Classification (IPC) or to both national classification and IPC

### B. FIELDS SEARCHED

Minimum documentation searched (classification system followed by classification symbols)

G01M13/04; F16C; G01N27/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-211317 A (NSK LIMITED) 12 December 2019 (2019-12-12)<br>paragraphs [0010]-[0048], fig. 1-9 | 1-8 |
| A | JP 2020-193968 A (NSK LIMITED) 03 December 2020 (2020-12-03)<br>paragraphs [0016]-[0078], fig. 1-34 | 1-8 |
| A | MARUYAMA, Taisuke and another, In Situ Quantification of Oil Film Formation and Breakdown in EHD Contacts. Tribology Transactions. vol. 61, issue 6, 03 July 2018, pages 1057-1066, https://doi.org/10.1080/10402004.2018.1468519<br>entire text, all drawings | 1-8 |
| A | JP 2018-180004 A (NSK LIMITED) 15 November 2018 (2018-11-15)<br>entire text, all drawings | 1-8 |
| A | US 2020/0142392 A1 (GENERAL ELECTRIC COMPANY) 07 May 2020 (2020-05-07)<br>entire text, all drawings | 1-8 |
| A | CN 109002610 A (HEFEI UNIVERSITY OF TECHNOLOGY) 14 December 2018 (2018-12-14)<br>entire text, all drawings | 1-8 |

☐ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **18 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/008683**

| Patent document cited in search report | | | Publication date (day/month/year) | Patent family member(s) | | | Publication date (day/month/year) |
|---|---|---|---|---|---|---|---|
| JP | 2019-211317 | A | 12 December 2019 | (Family: none) | | | |
| JP | 2020-193968 | A | 03 December 2020 | (Family: none) | | | |
| JP | 2018-180004 | A | 15 November 2018 | US | 2019/0128866 | A1 | |
| | | | | WO | 2018/128062 | A1 | |
| | | | | EP | 3567358 | A1 | |
| | | | | CN | 110168341 | A | |
| US | 2020/0142392 | A1 | 07 May 2020 | (Family: none) | | | |
| CN | 109002610 | A | 14 December 2018 | (Family: none) | | | |

Form PCT/ISA/210 (patent family annex) (January 2015)

**EP 4 495 568 A1**

**Patent documents cited in the description**

- JP 2019211317 A

- JP 2022039415 A